# EUROPÄISCHE PATENTANMELDUNG

(11) **EP 0 960 770 A1**
(43) Veröffentlichungstag der Anmeldung: **01.12.1999**
(21) Anmeldenummer: 99108735.4
(22) Anmeldetag: 03.05.1999
(51) Int. Cl.: B60P 1/44

(54) **Fusssteuerung für eine Hubladebühne**

(30) Priorität: 26.05.1998 DE 19823535
(71) Anmelder: Bär, Gerd, 74078 Heilbronn (DE)
(72) Erfinder: Bär, Gerd, 74078 Heilbronn (DE)
(74) Vertreter: KOHLER SCHMID + PARTNER

(57) **Zusammenfassung**

Bei einer Fußsteuerung für eine Hubladebühne eines Fahrzeugs, mit zwei auf der Plattform (1) der Hubladebühne vorgesehenen Fußschaltern (2), deren Betätigungselemente (4) von einer auf der Plattform (1) stehenden Person jeweils aus einer Grundstellung in eine tiefere Schaltstellung mit einem Fuß niedergedrückt werden können, sind die beiden Fußschalter (2) in einem gemeinsamen Gehäuse (3) untergebracht, welches zwischen den beiden Betätigungselementen (4) über die von diesen in ihrer Schaltstellung eingenommene Höhe erhöht ist. Das möglichst flache gemeinsame Gehäuse kann auf der Plattformfläche beliebig plaziert werden. Der dazwischenliegende Gehäuseabschnitt ist so weit erhöht, daß die Fußsteuerung gegen die gleichzeitige Betätigung der beiden Fußschalter durch eine Kiste, Palette o.ä. geschützt ist.

## Beschreibung

Die Erfindung betrifft eine Fußsteuerung für eine Hubladebühne eines Fahrzeugs, mit zwei auf der Plattform der Hubladebühne vorgesehenen Fußschaltern, deren Betätigungselemente von einer auf der Plattform stehenden Person jeweils aus einer Grundstellung in eine tiefere Schaltstellung mit einem Fuß niedergedrückt werden können.

Alle bisher bekannten Fußsteuerungen sind so ausgebildet, daß die Fußschalter und die Betätigungsmechanik unter oder zumindest teilweise unterhalb der Plattformfläche angeordnet sind. Daher erfordern alle Fußsteuerungen, seien es nun Zwei-/Drei-/Vier-Knopfsteuerungen oder kombinierte Steuerungen mit Hebelausführung, sehr aufwendige Durchbrüche in der Oberdecke der Plattform. Da es Stahlplattformen und Verbundplattformen sowie Aluminiumplattformen in Strangpreßprofiltechnik gibt, bei denen aufgrund der Stege fertigungstechnische Belange zu berücksichtigen sind, muß bei der Anordnung einer Fußsteuerung auch die Konstruktion der jeweiligen Plattform berücksichtigt werden. Weiter kommt hinzu, daß vom Kunden spezielle Positionen der Fußsteuerung auf der Plattform gewünscht werden. Daher erfordert der Einbau einer Fußsteuerung sehr aufwendige Vorbereitungen und insbesondere eine genaue konstruktive Planung. Ein nachträglicher Einbau ohne konstruktive Untersuchung der Plattform ist praktisch unmöglich.

Bei bekannten Fußsteuerungen gibt es zwei elektrische Verbindungsarten:
- In einer Verteilerdose sind alle Kabel von Fußschalter, Blinkleuchten, Lagesensor, Blinkgeber zusammengefaßt, und von dort führt auch die Leitung über die Tragarme zur Hubladebühnensteuerung. Die manuelle Verkabelung mit dieser Verteilerdose ist sehr aufwendig, weil sie an der Plattform erfolgen muß.
- Der komplette Zusammenbau erfolgt als Kabelsatz, bei dem alle Kabel an einem oder mehreren Verknüpfungspunkten durch Verlöten der Adern und anschließendes Isolieren und Einschrumpfen der Kabelisolierung verbunden werden.

Die Kabelsatz-Ausführung ist zwar etwas günstiger, erfordert aber bei Beschädigung den Tausch des ganzen Kabelsatzes samt Schaltelementen oder eine aufwendige Reparatur. Desweiteren ist man nicht variabel, z.B. im Export, wo die Warnblinkleuchten nicht benötigt werden und daher die Kabelanschlüsse abgeschnitten und isoliert werden müssen.

Bei allen bekannten Fußsteuerungen erfolgt die Schaltverknüpfung der Fußschaltersignale entweder mit Relais oder mit einer elektronischen Logik an der Zentralsteuerung der Hubladebühne. Dies erfordert längere Kabel für Stromschleifen, und außerdem erfordert das Herunterführen des Signals des Lagesensors zum zentralen Blinkgeber und das Wiederhochführen zu den Blinkleuchten doppelte Leitungen. Das vieladrige Kabel mit großem Durchmesser, welches über mehrere Drehgelenke geführt werden muß, ist biegebeansprucht und insbesondere im Winter bruchgefährdet.

Es ist daher die Aufgabe der Erfindung, eine Fußsteuerung für eine Hubladebühne der eingangs genannten Art derart weiterzubilden, daß sie, insbesondere auch beim nachträglichen Einbau, möglichst einfach und leicht auf der Plattform angeordnet werden kann.

Erfindungsgemäß wird diese Aufgabe auf ebenso überraschend einfache wie wirkungsvolle Art und Weise dadurch gelöst, daß die beiden Fußschalter in einem gemeinsamen Gehäuse untergebracht sind, welches zwischen den beiden Betätigungselementen über die von diesen in ihrer Schaltstellung eingenommene Höhe erhöht ist.

Das möglichst flache gemeinsame Gehäuse kann auf der Plattformfläche beliebig plaziert werden. Lediglich die Löcher für eine Kabeldurchführung und für Befestigungsschrauben müssen in die Oberdecke der Plattform gebohrt werden, wobei auf die darunter liegende Mechanik nur wenig Rücksicht zu nehmen ist. Besonders vorteilhaft ist der leichte nachträgliche Einbau, insbesondere im Hinblick auf Exportmärkte, bei denen ein Händler oder Fahrzeugbauer eine Hubladebühne ohne Fußsteuerung bezieht und diese dann nach Kundenwunsch individuell hinzufügen kann. Die beiden Betätigungselemente (z.B. elastomere Druckknöpfe) sind etwa im Abstand von 250 bis 300 mm angeordnet, und der dazwischenliegende Gehäuseabschnitt ist so weit erhöht, daß die Fußsteuerung gegen die gleichzeitige Betätigung der beiden Fußschalter durch eine auf der Plattform abgestellte Kiste, Palette o.ä. geschützt ist. Durch den erhöhten Gehäuseabschnitt wird außerdem Raum geschaffen, in welchem weitere Technik untergebracht werden kann.

Das erfindungsgemäße Gehäuse bietet einen optimalen Schutz für die Fußschalter selbst, insbesondere auch für dessen meist elastomeres Betätigungselement. Die erfindungsgemäße Fußsteuerung kann bei allen Plattformsystemen Verwendung finden.

Bei besonders bevorzugten Ausführungsformen der Erfindung liegt das Gehäuse auf der ebenen Oberfläche der Plattform auf, d.h., es braucht in der Plattform keine Vertiefung zur Aufnahme des Gehäuses ausgebildet zu werden.

Im Gehäuse können weiterhin die Schaltlogik für die Fußsteuerung, die Elektronik zur Steuerung der Bewegung der Plattform, ein Lagesensor zum Erfassen der jeweiligen Lage der Plattform, ein Blinkgeber für eine oder mehrere an der Plattform vorgesehene Blinkleuchten sowie eine zentrale elektrische Kabelverknüpfungsstelle vorgesehen sein.

Der Lagesensor wird benötigt, um die Fahr- oder Arbeitsstellung der Plattform im Fahrerhaus anzuzeigen. Gleichzeitig schaltet dieser Lagesensor den Blinkgeber für die an der Plattformspitze vorgesehenen Blinkleuchten beim Öffnen der Plattform ein bzw. beim Schließen wieder aus.

Alle sensiblen Komponenten der Fußsteuerung können industriell hergestellt und im Gehäuse vergossen werden. Dies ermöglicht auch die industrielle Prüfung der gesamten Elektrik und Elektronik.

Die elektrischen Anschlüsse für diese Fußsteuerung können aus dem Gehäuse durch mindestens eine Kabelöffnung auf seiner Unterseite heraus und durch ein einziges einfaches Loch in der Plattformoberdecke ins Innere der Plattform durchgeführt werden. Die elektrischen Anschlüsse können vorzugsweise mit einer wasserdichten Steckvorrichtung ausgeführt sein, wozu am Gehäuse steckbare Kabelanschlüsse vorgesehen sein können. Aber auch eingegossene Kabel sind möglich.

Die Herstellung des Gehäuses erfolgt vorzugsweise als Zinkdruckguß, kann aber auch aus glasfaserverstärktem Kunststoff hergestellt sein.

Um die Höhe des Gehäuses im Bereich der Fußschalter möglichst gering zu halten, kann in einer vorteilhaften Ausführungsform, die erfindungsgemäß auch in Alleinstellung vorgesehen sein kann, im Fußschalter eine Umlenkung der Niederdrückbewegung des Betätigungselements quer zur Niederdrückbewegung, vorzugsweise um 90°, in eine eines elektrischen Schalters auslösende Schaltbewegung stattfinden. Der elektrische Schalter, z.B. ein Mikroschalter, muß dann nicht unterhalb des Betätigungselements, sondern kann neben diesem in der Plattform angeordnet werden. Zur Umlenkung kann z.B. am Betätigungselement eine schräg zur Niederdrückbewegung verlaufende Steuerfläche für den elektrischen Schalter vorgesehen sein. In einer anderen Ausgestaltung kann der Fußschalter einen elastischen, insbesondere elastomeren Körper aufweisen, der durch die Niederdrückbewegung gegen einen Boden des Fußschalters zusammengedrückt wird und dabei gleichzeitig in eine Richtung quer zur Niederdrückrichtung zum Auslösen des elektrischen Schalters (Mikroschalter) ausweicht.

Weitere vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigt:
- Fig. 1: eine Draufsicht auf das Gehäuse der erfindungsgemäßen Fußsteuerung;
- Fig. 2: eine Seitenansicht des in Fig. 1 gezeigten Gehäuses;
- Fig. 3: den Querschnitt des Gehäuses im Bereich seines einen Fußschalters;
- Fig. 4: die Oberseite der Plattform einer Hubladebühne mit dem aufmontierten, in den Fign. 1 bis 3 gezeigten Gehäuse;
- Fig. 5: den Querschnitt der in Fig. 4 gezeigten Plattform im Bereich des Gehäuses; und
- Fig. 6: in einer der Fig. 3 entsprechenden Ansicht eine weitere Ausführungsform eines Fußschalters.

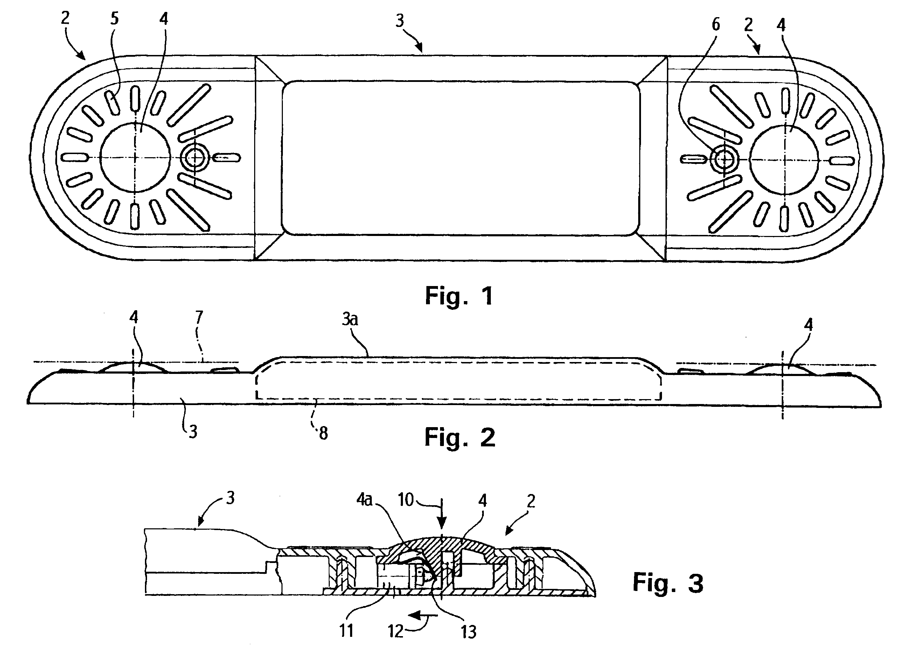

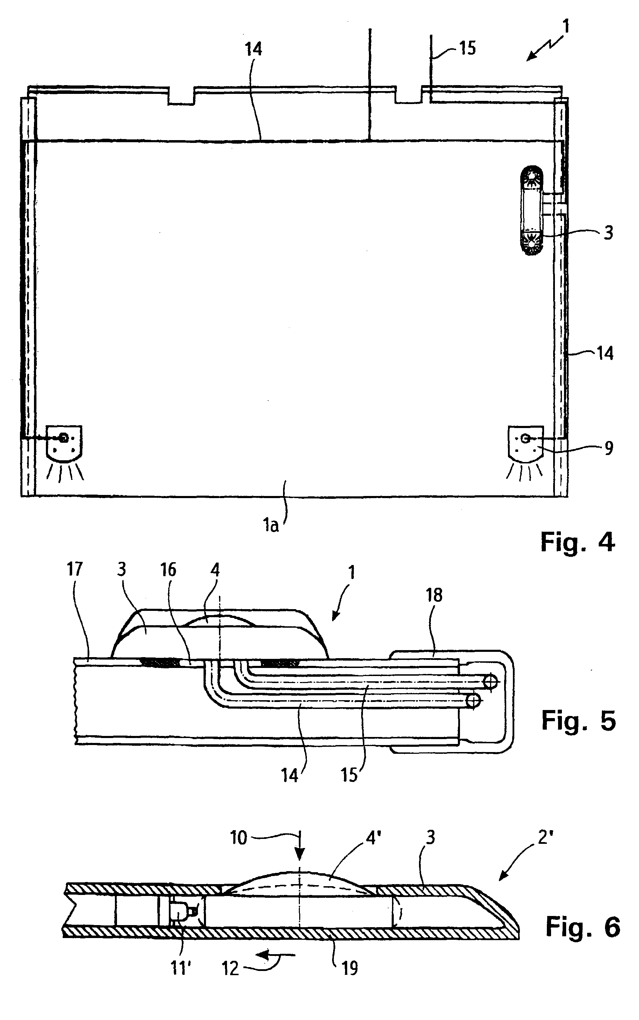

Die auf der Plattform **1** (Fig. 4) einer Hubladebühne eines Fahrzeugs angeordnete Fußsteuerung, mit der die Bewegung der Hubladebühne gesteuert wird, umfaßt zwei Fußschalter **2**, die in einem flachen Gehäuse **3** untergebracht sind (Fig. 1). Die als elastomere Druckknöpfe ausgebildeten Betätigungselemente **4** der Fußschalter 2 können von einer auf der Plattform 1 stehenden Person aus der in Fig. 1 gezeigten Grundstellung in eine tiefere Schaltstellung mit einem Fuß niedergedrückt werden. Der Abstand zwischen den beiden Betätigungselemente 4 beträgt ca. 250 bis 300 mm, wobei um die Betätigungselemente 4 herum auf der Gehäuseoberseite jeweils strahlenförmig Rippen **5** zur Erhöhung der Trittfestigkeit vorgesehen sind. Außerdem sind noch zwei Befestigungslöcher **6** vorgesehen, mittels denen das Gehäuse 3 auf der Plattform 1 befestigt wird. Die Herstellung des Gehäuses erfolgt vorzugsweise als Zinkdruckguß, kann aber auch aus glasfaserverstärktem Kunststoff bestehen.

Wie Fig. 2 zeigt, ist das Gehäuse 3 auf seinem mittleren Abschnitt **3a** zwischen den beiden Betätigungselementen 4 zumindest über die von diesen in ihrer Schaltstellung eingenommene Höhe überhöht ausgebildet, damit die beiden Fußschalter 2 durch das Abstellen einer Kiste oder Palette auf der Plattform 1 nicht gleichzeitig betätigt werden können. Im gezeigten Ausführungsbeispiel erstreckt sich der mittlere Abschnitt 3a bis auf das Niveau **7** der Betätigungselemente 4 in ihrer Grundstellung. Durch den erhöhten mittleren Gehäuseabschnitt 3a wird außerdem im Gehäuse 3 ein Innenraum **8** geschaffen, der zur Aufnahme von weiteren Komponenten der Fußsteuerung wie z.B. der Schaltlogik für die Fußsteuerung oder eines Lagesensors zum Erfassen der jeweiligen Lage der Plattform 1, oder von sonstigen Teilen wie z.B. der Elektronik zur Steuerung der Bewegung der Plattform 1 oder eines Blinkgebers für an der Plattform 1 vorgesehene Blinkleuchten **9** (Fig. 4) genutzt werden kann.

Fig. 3 zeigt den Innenaufbau eines Fußschalters 2. Durch Niederdrücken (Pfeilrichtung **10**) des Betätigungselements 4 wird ein elektrischer Mikroschalter **11** ausgelöst, wobei durch eine schräg zur Richtung 10 verlaufende Steuerfläche **4a** des Betätigungselements 4 die Niederdrückbewegung um 90° in eine den Mikroschalter 11 auslösende Schaltbewegung (Pfeilrichtung **12**) umgelenkt wird. Zwischen der Steuerfläche 4a und dem Mikroschalter 11 befindet sich noch eine Schaltfeder **13**, gegen dessen Rückstellkraft das Betätigungselement 4 zum schalten des Mikroschalters 11 niedergedrückt werden muß.

In Fig. 4 ist die Anordnung des Gehäuses 3 auf der Plattform 1 gezeigt. Vom Gehäuse 3, in dem sich der Blinkgeber sowie die Steuerelektronik für die Plattform 1 befinden, gehen die Kabel **14** zu den an der Plattformspitze **1a** vorgesehenen Blinkleuchten **9** sowie die Steuerkabel **15** zum Hubwerk der Hubladebühne ab. Mit dem Lagesensor wird die jeweilige Stellung der Plattform 1 im Fahrerhaus des Fahrzeugs angezeigt. Die elektrischen Anschlüsse der Kabel 14, 15 können vorzugsweise mit einer wasserdichten Steckvorrichtung ausgeführt sein, so daß die Kabel 14, 15 bei Beschädigung leicht zu auswechseln sind. Aber auch im Gehäuse 3 eingegossene Kabel sind möglich. Die leichte Einbaubarkeit wird in diesem Fall auch dadurch beträchtlich erhöht, daß die erforderlichen Kabel unabhängig vom Gehäuse individuell lang abgeschnitten werden können.

Wie in Fig. 5 gezeigt ist, sind diese unten aus dem Gehäuse 3 durch eine Kabelöffnung abgehenden Kabel 14, 15 durch ein einfaches Loch **16** in der Oberdecke **17** der Plattform 1 ins Innere der Plattform 1 durchgeführt und dort dann z.B. in Hohlräumen (Querrippen) der Plattform 1 und in einem Randabschlußprofil **18** weitergeführt.

Fig. 6 zeigt eine weitere Ausführung eines Fußschalters **2'**, bei dem das als elastomerer Druckknopf ausgebildete Betätigungselement **4'** gleichzeitig zur Umlenkung der Niederdrückbewegung (Pfeilrichtung 10) um 90° in eine den Mikroschalter 11 auslösende Schaltbewegung (Pfeilrichtung 12) dient. Beim Niederdrücken des Betätigungselements 4' durch eine Person wird dieses zwischen dem Boden **19** des Fußschalters 2' bzw. des Gehäuses 3 und dem Fuß zusammengedrückt. Aufgrund seiner hohen Elastizität weicht es in den seitlichen Freiraum des Gehäuses 3 in Pfeilrichtung 12 aus, wodurch der Mikroschalter **11'** betätigt wird. In Fig. 6 ist das zusammengedrückte und seitlich expandierte Betätigungselement 4' gestrichelt dargestellt.

## Patentansprüche

1. Fußsteuerung für eine Hubladebühne eines Fahrzeugs, mit zwei auf der Plattform (1) der Hubladebühne vorgesehenen Fußschaltern (2; 2'), deren Betätigungselemente (4; 4') von einer auf der Plattform (1) stehenden Person jeweils aus einer Grundstellung in eine tiefere Schaltstellung mit einem Fuß niedergedrückt werden können,
dadurch gekennzeichnet
daß die beiden Fußschalter (2; 2') in einem gemeinsamen Gehäuse (3) untergebracht sind, welches zwischen den beiden Betätigungselementen (4; 4') über die von diesen in ihrer Schaltstellung eingenommene Höhe erhöht ist.

2. Fußsteuerung nach Anspruch 1, dadurch gekennzeichnet, daß das Gehäuse (3) auf der ebenen Oberfläche der Plattform (1) aufliegt.

3. Fußsteuerung nach Anspruch 1 oder 2, dadurch gekennzeichnet, daß im Gehäuse (3) auch die Schaltlogik für die Fußsteuerung und/oder die Elektronik zur Steuerung der Bewegung der Plattform (1) und/oder ein Lagesensor zum Erfassen der jeweiligen Lage der Plattform (1) und/oder ein Blinkgeber für eine oder mehrere an der Plattform (1) vorgesehene Blinkleuchten (9) und/oder eine zentrale elektrische Kabelverknüpfungsstelle vorgesehen ist.

4. Fußsteuerung nach einem der vorhergehenden Ansprüche, dadurch gekennzeichnet, daß die im Gehäuse (3) vorgesehenen Komponenten im Gehäuse (3) vergossen sind.

5. Fußsteuerung nach einem der vorhergehenden Ansprüche, dadurch gekennzeichnet, daß das Gehäuse (3) auf seiner Unterseite mindestens eine Kabelöffnung aufweist.

6. Fußsteuerung nach einem der vorhergehenden Ansprüche, dadurch gekennzeichnet, daß am Gehäuse (3) steckbare Kabelanschlüsse vorgesehen sind.

7. Fußsteuerung nach einem der vorhergehenden Ansprüche, dadurch gekennzeichnet, daß das Gehäuse (3) aus Metalldruckguß hergestellt ist.

8. Fußsteuerung nach einem der Ansprüche 1 bis 6, dadurch gekennzeichnet, daß das Gehäuse (3) aus Kunststoff hergestellt ist.

9. Fußsteuerung für eine Hubladebühne eines Fahrzeugs, mit mindestens einem auf der Plattform (1) der Hubladebühne vorgesehenen Fußschalter (2; 2'), dessen Betätigungselement (4') von einer auf der Plattform (1) stehenden Person aus einer Grundstellung in eine tiefere Schaltstellung mit einen Fuß niedergedrückt werden kann, insbesondere nach einem der vorhergehenden Ansprüche,
dadurch gekennzeichnet,
daß im Fußschalter (2; 2') eine Umlenkung der Niederdrückbewegung des Betätigungselements (4') quer zur Niederdrückbewegung, vorzugsweise um etwa 90°, in eine einen elektrischen Schalter (Mikroschalter 11; 11') auslösende Schaltbewegung stattfindet.

10. Fußsteuerung nach Anspruch 9, dadurch gekennzeichnet, daß zur Umlenkung am Betätigungselement (4) eine schräg zur Niederdrückbewegung verlaufende Steuerfläche (4a) für den elektrischen Schalter (Mikroschalter 11; 11') vorgesehen ist.

11. Fußsteuerung nach Anspruch 9, dadurch gekennzeichnet, daß der Fußschalter (2') einen elastischen, insbesondere elastomeren Körper aufweist, der durch die Niederdrückbewegung gegen einen Boden (19) des Fußschalters (2') zusammengedrückt wird und dabei gleichzeitig in eine Richtung quer zur Niederdrückrichtung zum Auslösen des elektrischen Schalters (Mikroschalter 11; 11') ausweicht.

12. Fußsteuerung nach Anspruch 11, dadurch gekennzeichnet, daß das Betätigungselement (4') als der elastische, insbesondere elastomere Körper ausgebildet ist.
